# EUROPÄISCHE PATENTANMELDUNG

(11) **EP 1 040 881 A1**
(43) Veröffentlichungstag der Anmeldung: **04.10.2000**
(21) Anmeldenummer: 99105445.3
(22) Anmeldetag: 17.03.1999
(51) Int. Cl.: B21D 43/05, B23Q 1/62, B25J 9/10

(54) **Antriebssystem zur Automatisierung von Umformmaschinen**

(71) Anmelder: Müller Weingarten AG, D-88250 Weingarten (DE)
(72) Erfinder: Götz, Edwin, 88339 Bad Waldsee (DE); Reichenbach, Rainer, 88281 Unterankenreute (DE)
(74) Vertreter: Patentanwälte Eisele, Otten & Roth

(57) **Zusammenfassung**

Es wird ein Antriebssystem vorgeschlagen welches durch einfachsten Aufbau mittels 2 stationärer Antriebsmotoren (A1,A2;20,21;40,41), die gemeinsam auf einen Bewegungs- oder Antriebsstrang (1,18;9,39) wirken, eine Vielzahl von Automatisierungsbewegungen bevorzugt in Simulatoren, Pressenstraßen und Großteil-Stufenpressen oder dergleichen ausführen kann.

## Beschreibung

Die Erfindung betrifft ein Antriebssystem zur Erzeugung definierter Bewegungsabläufe und lagegerechter Werkstückmanipulation nach dem Oberbegriff des Anspruches 1.

### Stand der Technik

Für eine Werkstückmanipulation in Simulatoren, Pressen, Pressenstraßen oder Großteilstufenpressen sind eine Vielzahl von Bewegungen erforderlich.

Mechanisch gesteuerte Transport- und Manipulationssysteme führen mittels Kurvengetriebe gesteuerte Längs- und Querbewegungen sowie eventuelle Hub- und Schwenkbewegungen aus, die vom Hauptantrieb einer Presse abgeleitet werden und somit synchron und zwangsgesteuert zur Stößelbewegung verlaufen (EP 0 210 745, Fig. 4). Bei neueren Systemen gemäß der EP 0 672 480 B1 oder der EP 0 693 334 A1 erfolgt die Werkstückhandhabung zwischen einzelnen Bearbeitungsstationen individuell durch einzelne Vorrichtungen, die insbesondere eine universelle Beweglichkeit der Werkstücke zwischen den einzelnen Bearbeitungsstufen ermöglichen. Durch einen solchen, mit dem Zentralantrieb der Presse nicht mechanisch verbundenen Antrieb kann der Transport und die Lagemanipulation der Werkstücke mit beliebigen Freiheitsgraden insbesondere in größeren Pressenanlagen optimiert werden. Hierzu wird auf die Ausführung in der EP 0 672 480 verwiesen, in der zusätzlich zur Transportbewegung mit evtl. Teileverschwenkung auch bei dem Dreiachs-Transfer die erforderliche Schließbewegung der Greifer zur Teileaufnahme dargestellt ist.

Ein sogenannter Schließkasten ist auch in der EP 0 650 781 veröffentlicht, in der mittels Gewindespindel oder Zahnriemen die Schließbewegung durchgeführt wird.

Als weitere Teilehandhabung kann auch eine Lagemanipulation durch eine zwischen den Werkzeugstufen angeordnete Zwischenablage oder Orientierstation erforderlich sein, wie in der EP 0 847 818 offenbart ist.

Aus der DE 44 08 447 A1 ist eine Transporteinrichtung zum transportieren von Werkstücken bekannt geworden, bei welcher über eine Zugmittelanordnung sowohl der Quertransport eines Transportschlittens an einem Längsträger als auch die Hubbewegung des Werkstücks an einer Säule erfolgt. Zur Durchführung diese Bewegungen sind zwei Riemensysteme erforderlich, die in ihrem Bewegungsablauf ein starres Bewegungsprofil erzeugen. Die Hub- und Längsbewegung des Werkstücks ist durch die Anordnung des Riemenantriebs fest vorgegeben. Eine vergleichbare Anordnung ist in der DE 32 33 428 C2 gezeigt. Schließlich zeigt auch die Veröffentlichung: IBM Techn. Disclosure Bulletin, Vol. 14 No., 8 Jan. 1972 Antriebsvarianten mit endlosen Seilantrieben. Durch die entsprechenden Drehzahl- und Drehsinnsteuerungen getrennter Antriebssysteme wird die Verschiebung von übereinander angeordnete Achsen für die Bewegung eines Positioniertisches ausgelöst. Auch hier sind 2 getrennte Riemensysteme offenbart. Die Anwendung wurde in der Datenverarbeitung zur Steuerung von Datenausgabegeräten, wie z. B. Stiftplotter, realisiert.

### Aufgabe und Vorteil der Erfindung

Der Erfindung liegt die Aufgabe zugrunde, das gattungsgemäße Antriebssystem so auszubilden, daß auf einfachste Weise mit hoher Genauigkeit und großer Beschleunigung eine Werkstücktransport, eine Werkstückmanipulation und eine Werkstückpositionierung durchführbar ist, wobei bei hoher Transportgeschwindigkeit insbesondere mit geringer Antriebsleistung und geringen Transportmassen gearbeitet werden kann.

Diese Aufgabe wird ausgehend von einem Antriebssystem nach dem Oberbegriff des Anspruchs 1, durch die kennzeichnenden Merkmale des Anspruchs 1 gelöst. In den Unteransprüchen sind vorteilhafte und zweckmäßige Weiterbildungen und Anwendungsbeispiele des im Hauptanspruch angegebenen Antriebssystem angegeben.
Der Erfindung liegt der Kerngedanke zugrunde, daß mittels eines einzigen Antriebsstranges und der Drehzahl- und Drehsinnregelung von 2 diesen antreibenden Motoren eine beliebige zweiachsige Bewegung in horizontaler und/oder vertikale Richtung möglich ist.

Insbesondere kann der Bewegungsablauf der Automatisierungseinrichtungen durch entsprechende Anordnung von Festpunkten in einer vertikalen Ebene beliebig geregelt werden, d. h. jegliches Bewegungsprofil in einer vertikalen Ebene sowohl in horizontaler als auch in vertikaler Richtung ist regelbar.
Mittels einer hochdynamischen Regelung der beiden Motoren lassen sich alle Bewegungsprofile mit nur einem Antriebsstrang ausführen. Durch eine programmierte Steuerung bzw. Regelung der beiden voneinander unabhängigen Antriebe wird der Antriebsstrang in seinem Bewegungsablauf, Geschwindigkeit und Bewegungsrichtung beeinflußt, wodurch jede gewünschte Fahrkurve erreicht wird.
Durch den Einsatz von zwei stationär angeordneten Antriebsmotoren wird auch die Energiezuführung wesentlich vereinfacht. Durch Reduzierung der Antriebsmasse und den zwei ortsfesten Motoren ergibt sich auch eine deutliche Verbesserung der Energiebilanz.

Die Transporteinrichtung kann bei einem Einsatz für eine Pressenautomatisierung die verschiedensten Transportaufgaben sowohl bei Pressenstraßen als auch bei Großteilstufenpressen übernehmen, wie z. B. als Einlegegerät vor der ersten Umformstufe, als Verkettung zwischen zwei Umformstufen, als Entnahmegerät zur Teileentsorgung nach der letzten Umformstufe, als Antrieb für die Schließ- und Öffnungsbewegung eines Dreiachs-Transfers mit Greifern oder als Antrieb für die Verschwenkung der Zwischenablage bzw. Orientierungsstation.
Dabei kann das Grundprinzip auf Bewegungsabläufe ausgeweitet werden, wie sie prinzipiell aus der EP 0 672 480 B1. der EP 0 650 781 A1 und der EP 0 847 818 der Anmelderin bekannt sind. Diese Patentschriften werden deshalb ausdrücklich zum Inhalt auch der vorliegenden Anmeldung gemacht.

Weitere Einzelheiten und Vorteile der Erfindung ergeben sich aus der nachfolgenden Erläuterung zu den Prinzipdarstellungen und von Ausführungsbeispielen.

Die 4 Figuren zeigen:
- Figur 1: Prinzipdarstellung des Antriebssystems mit endlosem Transportmittel
- Figur 2: Prinzipdarstellung des Antriebssystems mit endlichem Transportmittel
- Figur 3: Ausführungsbeispiel Schließsystem Greiferschienen
- Figur 4: Ausführungsbeispiel Transportsystem

### Beschreibung

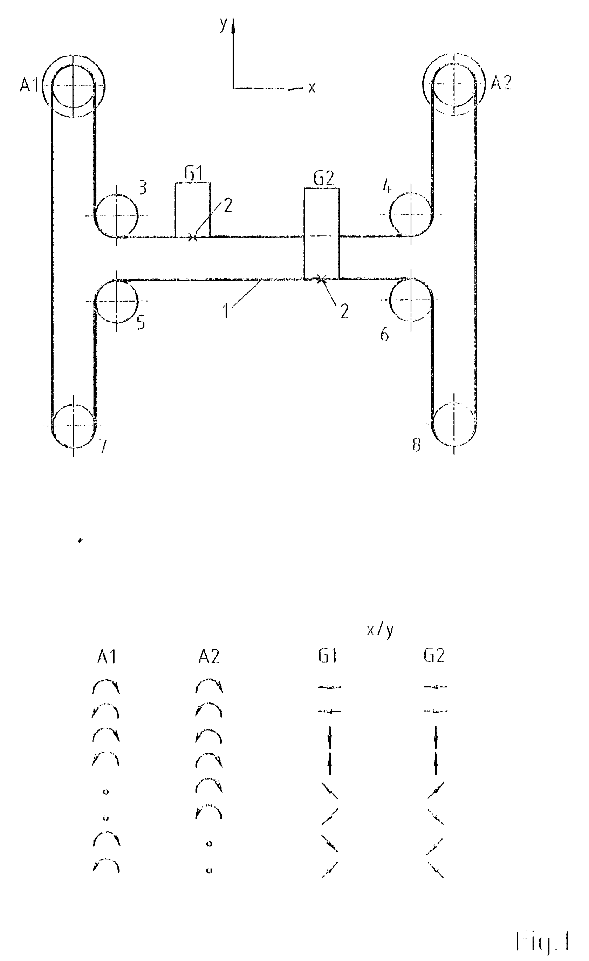

Figur 1 zeigt das erfindungsgemäße Antriebssystem mit einem endlosen Transportmittel 1, welches durch die Antriebe A1 und A2 verfahrbar ist. Die zu bewegenden Teile, z.B. Greiferschienen, sind mit G1 und G2 bezeichnet. Mittels Verbindungselemente 2 sind G1 und G2 fest mit dem Transportmittel 1 verbunden.

Mögliche Bewegungsabläufe, erzeugt durch die Drehbewegung oder Ruhestellung der Antriebe A1 und A2, sind in der Tabelle dargestellt. Die Drehrichtung ist durch Pfeile, eine Ruhestellung durch Kreise gekennzeichnet und die dadurch erzeugte Lageveränderung der zu bewegenden Teile G1 und G2 sind ebenfalls durch Pfeile dargestellt.

Werden zum Beispiel die Antriebe A1, A2 beide rechtsdrehend geregelt, so fährt G1 und G2 aufeinander zu und im Falle einer Betätigung von Greiferschienen wird eine Schließbewegung ausgeführt.

Aus der Tabelle ist ersichtlich, daß durch eine entsprechende Regelung der Antriebe jeder Punkt in einem X/Y Koordinatensystem angefahren werden kann. Neben der Regelung des Drehsinnes oder einer Ruhestellung der Antriebe A1, A2 können diese auch mit unterschiedlichen Drehzahlen geregelt werden zur Erreichung eines beliebigen Bewegungsprofiles.

Umlenkrollen 3 bis 8 dienen zur Führung und Umlenkung des Transportmittels 1 und verfügen über keinen Eigenantrieb.

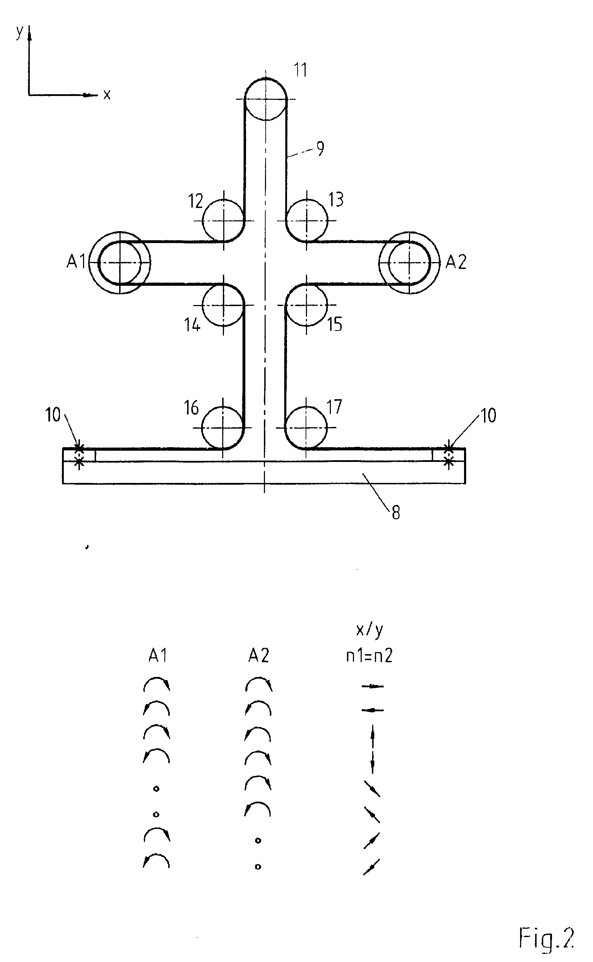

Figur 2 hat im Gegensatz zu Figur 1 kein endloses Transportmittel und unterscheidet sich auch in der Anordnung der Verbindung mit dem zu bewegenden Teil.

Die gezeigte Anordnung kann z.B. für das Transportsystem in einer Presse Anwendung finden. Dabei ist die Aufnahmeplatte für die Transportelemente mit 8 gekennzeichnet und das Antriebsmittel 9 ist mit den beiden Enden der Aufnahmeplatte 8 durch Verbindungselemente 10 verbunden. Auch in dieser Figur ist in einer Tabelle der Bewegungsablauf erklärt. Drehsinn bzw. Ruhestellung der Antriebe A1 und A2 erzeugen eine Fahrbewegung der Aufnahmeplatte 8 entsprechend der symbolischen Darstellung. So erzeugt zum Beispiel eine gleichseitige und mit gleicher Drehzahl geregelte rechtsdrehende Drehbewegung der Antriebe A1 und A2 eine horizontale Fahrbewegung der Aufnahmeplatte 8.

Auch bei dieser Anordnung kann in einer vertikalen Ebene jeder beliebige Punkt und jede gewünschte Fahrkurve erreicht werden und dieses ausschließlich durch die Regelung von Drehsinn, Haltephasen und Drehzahl der Antriebe A1 und A2, Umlenkrollen 11-17 dienen zur Führung und Umlenkung des Transportmittel 9.

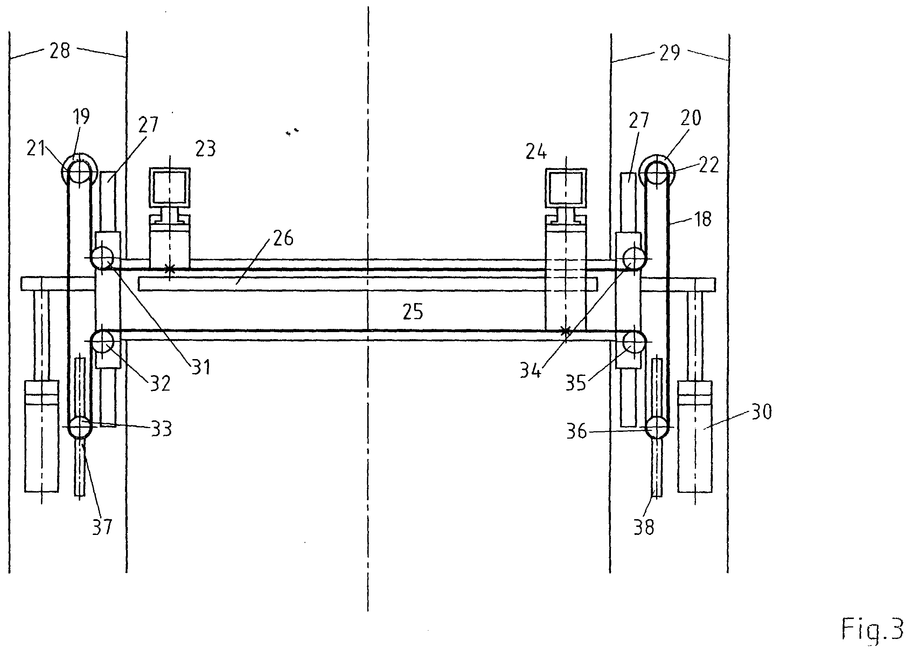

Figur 3 zeigt ein Anwendungsbeispiel des endlosen Transportmittel gemäß Figur 1 bei einer Presse. In einer Ansicht quer zur Transportrichtung ist ein Greiferschienentransfer dargestellt, in dem das erfindungsgemäße Antriebssystem die Funktion der Schließ- und Öffnungsbewegung ausführt. Als Transportmittel dient z.B. ein Zahnriemen 18 der durch Antriebe 19, 20 mit Zahnriemenscheiben 21, 22 angetrieben wird. Die die Greifer tragenden Greiferschienen 23, 24 sind mittels nicht näher dargestellten Klemmelementen mit dem Zahnriemen 18 verbunden. Zur Erzielung des gewünschten Bewegungsablaufes müssen die Greiferschienen 23, 24 wie dargestellt angeordnet werden, d.h. die Greiferschiene 23 muß an dem oben liegenden Teil des Zahnriemens 18, Greiferschiene 24 am unteren Teil befestigt sein. Auf dem Tragbalken 25 sind die horizontalen Führungen 26 für die Greiferschienen 23, 24 angebracht. Die vertikalen Führungen 27 sind an den Pressenständern 28, 29 befestigt. Gewichtsausgleichzylinder 30 dienen zur Reduzierung der Antriebsleistung. Umlenkrollen 31 bis 36 dienen zur Führung und Umlenkung des Zahnriemen 18 und haben keinen eigenen Antrieb.

Der Bewegungsablauf ist in Figur 1 beschrieben, worauf ausdrücklich verwiesen wird.

Als zusätzliche Bewegung können noch Verstellantriebe 37, 38 vorgesehen werden die eine vertikale Lageänderung der Umlenkrollen 33, 36 bewirken. Durch diese Lageveränderung wird eine unsymetische Anordnung der Greiferschienen 23, 24 erreicht. Wird z.B. Umlenkrolle 33 nach unten verfahren und Umlenkrolle 36 gleichzeitig nach oben so bewegt sich nur Greiferschiene 24 und zwar nach links. Auch eine Schrägstellung der Greiferschienen ist möglich, wobei z.B. Gelenke für den Längenausgleich am Tragbalken sorgen.

Die komplette Schließeinheit kann wie dargestellt ausgeführt werden oder auch in z.B. hängender Anordnung.

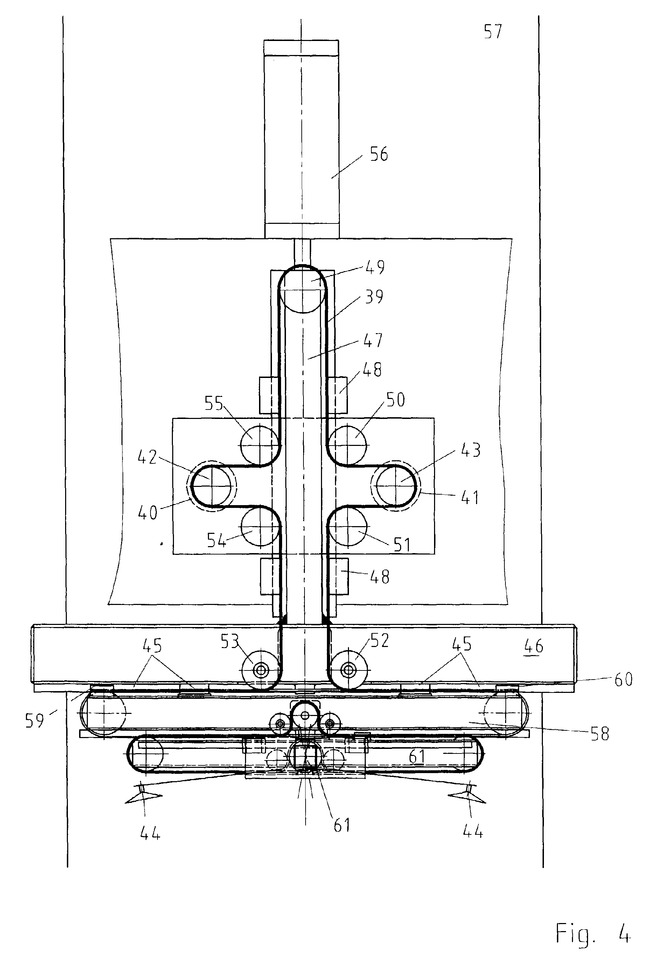

Figur 4 zeigt ein Anwendungsbeispiel eines endlichen Transportmittel entsprechend dem Prinzip gemäß Figur 2. In einer Ansicht in Transportrichtung der Werkstücke in einer Großteil-Stufenpresse ist beispielhaft eine Transporteinrichtung mit Saugerbalken dargestellt in dem das erfindungsgemäße Antriebssystem zum Antrieb eines Trag- oder Aufnahmebalken 58 dient.

Ein Zahnriemen 39 wird durch Antriebe 40, 41 über Zahnriemenscheiben 42, 43 angetrieben. Die Enden des Zahnriemen 39 sind über Klemmelemente 59, 60 mit den Enden des Trag- oder Aufnahmebalken 59 verbunden. Der Trag- oder Aufnahmebalken 58 steht in Wirkverbindung mit dem eigentlichen Saugerbalken 61 an dem die Aufnahmeelemente 44 für den Werkstücktransport befestigt sind.

Der Aufnahmebalken 58 ist über Längsführungen 45 mit dem Querträger 46 befestigt. Auf dem Querträger 46 ist eine Hubsäule 47 befestigt die in Führungen 48 eine vertikale Bewegung ausführen kann. Führungsrollen und Umlenkrollen ohne Eigenantrieb sind mit 49 bis 55 gekennzeichnet. Ein Gewichtsausgleichzylinder 56 ist zur Entlastung des Systemes vorgesehen.

Die gesamte Vorrichtung ist am Pressenständer 57 befestigt und kann aus einer einfachen oder am gegenüberliegenden Pressenständer befestigten zweifachen Ausführung je Funktionsgruppe bestehen. Der Bewegungsablauf des Trag- oder Aufnahmebalken 58 ist in Figur 2 beschrieben auf die ausdrücklich verwiesen wird.

Alternative Ausführungsformen gegenüber der Darstellung in Figur 4 werden durch eine veränderte Anordnung und durch eine Veränderung der Anzahl der Führungs- und Umlenkrollen 49 bis 55 erreicht.

Räumliche Bewegungen lassen sich ebenfalls durch das vorgeschlagene Antriebssystem realisieren in dem eine zusätzliche geregelte Achse hinzugefügt wird oder 2 komplette Antriebsysteme räumlich versetzt zueinander angeordnet werden. Durch Überlagerung der Bewegungen können dann geregelte Raumkurven ausgeführt werden, wie sie z.B. von einer Zwischenablage oder Orientierstation einer Großteilpresse oder Pressenstraße gefordert werden.

Als Antriebsstrang können die verschiedensten Antriebsmittel verwendet werden, wie z.B. Zahnriemen oder Ketten.

Die Erfindung ist nicht auf die dargestellten und beschriebenen Ausführungsbeispiele beschränkt. Sie umfaßt alle Weiterbildungen im Rahmen der Schutzrechtsansprüche.

## Patentansprüche

1. Einrichtung zur Bewegung eines Maschinenteils (G1, G2, 23, 24; 8, 58), vorzugsweise zur Aufnahme von Werkstücken in z. B. einer Presse, Pressenstraße, Großteil-Stufenpresse oder dergleichen, wobei das Maschinenteil mittels einer endlichen oder endlosen Zugmittelanordnung (1, 18; 9, 39) in wenigstens einer Bewegungsrichtung antreibbar ist, dadurch gekennzeichnet, daß die Zugmittelanordnung (1, 18; 9, 39) einen einzigen Antriebsstrang (1, 18; 9, 39) für eine vorzugsweise zweidimensionale Bewegung umfaßt, welcher von zwei stationären Antriebsmotoren (A1, A2; 20, 21; 40, 41) angetrieben ist, wobei die Drehrichtung und die Drehgeschwindigkeit der Antriebsmotoren die Bewegung des Maschinenteils bestimmt.

2. Einrichtung nach Anspruch 1, dadurch gekennzeichnet, daß das Maschinenteil zur Aufnahme von Werkstücken eine Aufnahmeplatte (8) oder einen Trag- oder Aufnahmebalken (42) für ein Werkstück-Transportelement, wie Saugerbalken (43) oder dergleichen, umfaßt.

3. Einrichtung nach Anspruch 1 oder 2, dadurch gekennzeichnet, daß eine Aufnahmeplatte (8) für ein Werkstück-Transportelement oder ein Trag- oder Aufnahmebalken (42) für ein Werkstück-Transportelement (43) an einem Querträger (46) längs verschiebbar angeordnet sind.

4. Einrichtung nach einem der vorgenannten Ansprüche, dadurch gekennzeichnet, daß wenigstens eine Hubsäule (47) vorgesehen ist, die an ihrem unteren Ende mit einem Querträger (46) verbunden ist, der seinerseits Führungsmittel (45) für einen Trag- oder Aufnahmebalken (42) für den Werkstücktransport aufweist.

5. Einrichtung nach einem der vorgenannten Ansprüche, dadurch gekennzeichnet, daß wenigstens eine Hubsäule (47) zentrisch stationär geführt ist, die an ihrem unteren Ende einen Querträger (46) für einen Trag- oder Aufnahmebalken (42) und insbesondere an ihrem oberen Ende eine Umlenkrolle (49) für einen Antriebsstrang (39) aufweist.

6. Einrichtung nach einem der vorgenannten Ansprüche, dadurch gekennzeichnet, daß den Antriebsmotoren (A1, A2; 40, 41) in einem Antriebsblock wenigstens je ein Umlenkrollenpaar (54, 55) bzw. (50, 51) zugeordnet sind.

7. Einrichtung nach einem der vorgenannten Ansprüche, dadurch gekennzeichnet, daß ein Gewichtsausgleichszylinder (56) vorgesehen ist, der mit der Hubsäule (47) verbunden ist.

8. Einrichtung nach einem der vorgenannten Ansprüche, dadurch gekennzeichnet, daß die Zugmittelanordnung als Riemenantrieb, insbesondere Zahnriemenantrieb (39), oder als Kettenantrieb ausgebildet ist.

9. Einrichtung nach einem der vorgenannten Ansprüche, dadurch gekennzeichnet, daß diese paarweise oder einzeln seitlich einer oder zwischen zwei Bearbeitungsstufen einer Presse, Pressenstraße, Großteil-Stufenpresse oder dergleichen angeordnet ist.

10. Einrichtung nach einem der vorgenannten Ansprüche, dadurch gekennzeichnet, daß der Trag- oder Aufnahmebalken (42) als verfahrbarer Ausleger und insbesondere als teleskopierbarer Mehrfachausleger bzw. Teleskoparm ausgebildet ist.

11. Einrichtung nach einem der vorgenannten Ansprüche, dadurch gekennzeichnet, daß die Zugmittelanordnung (1, 18) einen einzigen endlosen Antriebsstrang (1, 18) für eine Bewegung in wenigstens einer Bewegungsrichtung umfaßt, welcher von zwei stationären Antriebsmotoren (A1, A2 bzw. 19, 20) angetrieben ist, wobei die Drehrichtung und die Drehgeschwindigkeit der Antriebsmotoren (A1, A2 bzw. 19, 20) die Bewegung des Maschinenteils (23, 24) bestimmt.

12. Einrichtung nach Anspruch 11, dadurch gekennzeichnet, daß die Zugmittelanordnung sich quer zur Längsrichtung einer Pressenstraße oder Großteil-Stufenpresse erstreckt, wobei beidseitig der Pressenstraße je ein Antrieb (A1, A2; 19, 20) für eine gegenläufige Greiferschienenanordnung (23, 24) vorgesehen ist.

13. Einrichtung nach einem der vorgenannten Ansprüche 11 bis 12, dadurch gekennzeichnet, daß ein stationärer Tragbalken (25) mit horizontalen Führungseinrichtungen (26) für Greiferschienen (23, 24) vorgesehen ist, wobei eine gegenläufige Querbewegung der Greiferschienen (23, 24) durch einen gegenläufigen Zugmittelantrieb des endlosen Transportmittels (1, 18) erfolgt.

14. Einrichtung nach einem der vorgenannten Ansprüche 11 bis 13, dadurch gekennzeichnet, daß den Antriebsscheiben (A1, A2; 19, 20) jeweils drei seitlich der Pressenstraße anordnete Umlenkrollen (31, 32, 33 bzw. 34, 35, 36) zugeordnet sind, die einen umlaufenden Transport des Transportmittels gewährleisten.

15. Einrichtung nach einem der vorgenannten Ansprüche 11 bis 14, dadurch gekennzeichnet, daß den Antrieben (19, 20) mit zugehörigen Umlenkrollen (33, 36) ein Verstellantrieb (37, 38) für eine vertikale Lageänderung der Umlenkrollen (33, 36) zugeordnet sind.

16. Einrichtung nach Anspruch 15, dadurch gekennzeichnet, daß die Lageveränderung der Umlenkrollen (33, 36) symmetrisch oder asymmetrisch erfolgt.

17. Einrichtung nach einem der vorgenannten Ansprüche 11 bis 16, dadurch gekennzeichnet, daß der Tragbalken (25) mit horizontalen Führungen (26) für die Greiferschienen (23, 24) in einer vertikalen Führung (27) am Pressenständer (28, 29) geführt ist.

18. Einrichtung nach einem der vorgenannten Ansprüche, dadurch gekennzeichnet, daß der horizontale Tragbalken (25) auf Gewichtsausgleichszylindern (30) beidseitig an den Pressenständern (28, 29) gelagert ist.
